# EUROPÄISCHE PATENTSCHRIFT

(11) **EP 3 071 437 B1**
(45) Veröffentlichungstag und Bekanntmachung des Hinweises auf die Patenterteilung: **02.08.2017**
(21) Anmeldenummer: 13798934.9
(22) Anmeldetag: 23.11.2013
(51) Int. Cl.: B60K 11/08

(54) **KÜHLERGRILLANORDNUNG FÜR EIN FAHRZEUG**
RADIATOR GRILL ARRANGEMENT FOR A VEHICLE
ENSEMBLE CALANDRE DE RADIATEUR POUR UN VÉHICULE

(43) Veröffentlichungstag der Anmeldung: 28.09.2016
(73) Patentinhaber: Daimler AG, 70327 Stuttgart (DE)
(72) Erfinder: EDWARDS, Stephen, 71139 Ehningen (DE); JAKOBS, Holger, 72135 Dettenhausen (DE); MÜLLER, Heinz, 53773 Hennef (DE)
(74) Vertreter: JENSEN & SON
(86) Internationale Anmeldenummer: PCT/EP2013/003544
(87) Internationale Veröffentlichungsnummer: WO 2015/074675

(56) Entgegenhaltungen:
- EP-A1- 2 407 333
- EP-A1- 2 574 484
- DE-A1-102012 012 677
- US-A1- 2012 074 729

## Beschreibung

Die Erfindung betrifft ein Kühlergrillanordnung für ein Fahrzeug, welche zumindest einen einen Hauptlufteinlass einfassenden Tragrahmen, eine Anzahl von Verschlussklappen, die zwischen einer Verschlussstellung und einer Öffnungsstellung um eine Klappendrehachse drehbar gelagert sind, wobei an den Verschlussklappen Klappenhebel angeformt oder ausgebildet sind, die mit einem Schubriegel in Wirkverbindung stehen, und einen Stellantrieb zur Positionierung der Verschlussklappen umfasst.

Aus der DE 10 2011 103 585 A1 ist eine Kühlergrillanordnung für ein Kraftfahrzeug bekannt. Die Kühlergrillanordnung weist einen Tragrahmen auf, der einen Hauptlufteinlass einfasst, mit mindestens einer Klappenreihe, die mehrere benachbarte Klappen aufweist, wobei die Klappen zwischen einer Offenstellung zum Öffnen eines der jeweiligen Klappenreihen zugeordneten Einlassabschnitts des Hauptlufteinlasses und einer Schließstellung zum Verschließen dieses Einlassabschnitts verstellbar sind. Dabei weisen die Klappen jeweils wenigstens einen Klappenhebel auf, der um eine Klappenschwenkachse der jeweiligen Klappe verschwenkbar gelagert ist. Zudem ist ein Schubriegel vorgesehen, der bidirektional verstellbar am Tragrahmen angeordnet ist und der mit wenigstens einem Klappenhebel je Klappe der dem Schubriegel zugeordneten Klappenreihe antriebsverbunden ist, wobei der Tragrahmen zudem einen Stellantrieb zum Verstellen der Klappen zwischen der Offenstellung und der Schließstellung aufweist. Eine Positionierung ergibt sich für den Stellantrieb, wenn der Stellantrieb mit wenigstens einem Antriebshebel antriebsverbunden ist, der um eine Antriebsdrehachse drehbar gelagert ist, wenn die Antriebshebeldrehachse gegenüber den Klappenschwenkachsen der Klappen der jeweiligen Klappenreihe einen Neigungswinkel aufweist und wenn der Antriebshebel über eine Kopplungseinrichtung mit dem Schubriegel oder mit einem der Klappenhebel antriebsverbunden ist, die gegenüber dem Neigungswinkel tolerant ist.

Darüber hinaus ist aus der DE 10 2008 049 228 A1 eine Kühlergrillanordnung für einen Kraftwagenbug eines Kraftwagens bekannt, welcher eine Mehrzahl von Luftdurchtrittsöffnungen umfasst, die durch wenigstens ein Klappenelement einer Klappenanordnung zumindest im Wesentlichen verschließbar sind. Das wenigstens eine Klappenelement ist dabei schwenkbar um eine zugehörige Klappenachse gelagert, wobei das wenigstens eine Klappenelement zwischen einer Verschlussstellung, in welcher es wenigstens eine zugeordnete Luftdurchtrittsöffnung verschließt, und einer Öffnungsstellung, in welcher es eine zugeordnete Luftdurchtrittsöffnung vollständig freigibt, schwenkbar ist.

Aus der US 2012/074729 A1 ist eine Kühlergrillanordnung mit den Merkmalen des Oberbegriffs des Anspruchs 1 bekannt.

Der Erfindung liegt die Aufgabe zugrunde, eine gegenüber dem Stand der Technik verbesserte Kühlergrillanordnung für ein Fahrzeug anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Eine Kühlergrillanordnung für ein Fahrzeug umfasst zumindest einen einen Hauptlufteinlass einfassenden Tragrahmen, eine Anzahl von Verschlussklappen, die zwischen einer Verschlussstellung und einer Öffnungsstellung um eine Klappendrehachse drehbar gelagert sind, wobei an den Verschlussklappen Klappenhebel angeformt oder ausgebildet sind, die mit einem Schubriegel in Wirkverbindung stehen, und einen Stellantrieb zur Positionierung der Verschlussklappen. Außerdem ist ein Klappenrahmen zur Aufnahme der Verschlussklappen, des Schubriegels und des Stellantriebes vorgesehen, wobei der Klappenrahmen zweiteilig ausgebildet und an dem Tragrahmen einer Kühlerverkleidung kraft-, form- und/oder stoffschlüssig befestigbar ist.

Dadurch, dass die Verschlussklappen, der Schubriegel und der Stellantrieb an dem Klappenrahmen angeordnet sind, sind diese Bestandteile alle an einer Komponente anordbar, so dass eine Handhabung bei der Herstellung der Kühlergrillanordnung vereinfacht ist.

Zudem dient der Klappenrahmen als Lackierhilfsmittel zur Beschichtung der Verschlussklappen, wobei eine nochmalige Handhabung der Verschlussklappen nach dem Lackierprozess entfällt, da die Verschlussklappen bereits an dem Klappenrahmen angeordnet sind. Somit kann vorteilhaft zumindest das Risiko einer Beschädigung der Beschichtung der Verschlussklappen und des Tragrahmens vermindert werden.

Ausführungsbeispiele der Erfindung werden im Folgenden anhand nachfolgender Zeichnungen näher erläutert.

Dabei zeigen:
- Fig. 1: schematisch eine Kühlergrillanordnung für ein Fahrzeug mit Verschlussklappen in einer Verschlussstellung,
- Fig. 2: schematisch die Kühlergrillanordnung mit den Verschlussklappen in einer Öffnungsstellung,
- Fig. 3: schematisch einen Klappenrahmen für eine Kühlergrillanordnung eines Fahrzeuges,
- Fig. 4: schematisch einen Ausschnitt eines Tragrahmens mit befestigtem Klappenrahmen,
- Fig. 5: schematisch einen vergrößerten Ausschnitt einer perspektivischen Ansicht einer Verschlussklappe in einer Verschlussstellung,
- Fig. 6: schematisch einen vergrößerten Ausschnitt einer perspektivischen Ansicht einer Verschlussklappe in einer Öffnungsstellung,
- Fig. 7: schematisch einen vergrößerten Ausschnitt einer perspektivischen Ansicht einer Verschlussklappe in der Verschlussstellung im Bereich eines Stellantriebes,
- Fig. 8: schematisch einen vergrößerten Ausschnitt einer perspektivischen Ansicht einer Verschlussklappe in der Öffnungsstellung im Bereich eines Stellantriebes,
- Fig. 9: schematisch eine vergrößerten Ausschnitt einer perspektivischen Ansicht eines Schubriegels,
- Fig. 10: schematisch einen vergrößerten Ausschnitt einer perspektivischen Ansicht einer Wirkverbindung zwischen Verschlussklappe und Schubriegel in der Öffnungsstellung und
- Fig. 11: schematisch einen vergrößerten Ausschnitt einer perspektivischen Ansicht einer Wirkverbindung zwischen Verschlussklappe und Schubriegel in der Verschlussstellung.

Einander entsprechende Teile sind in allen Figuren mit den gleichen Bezugszeichen versehen.

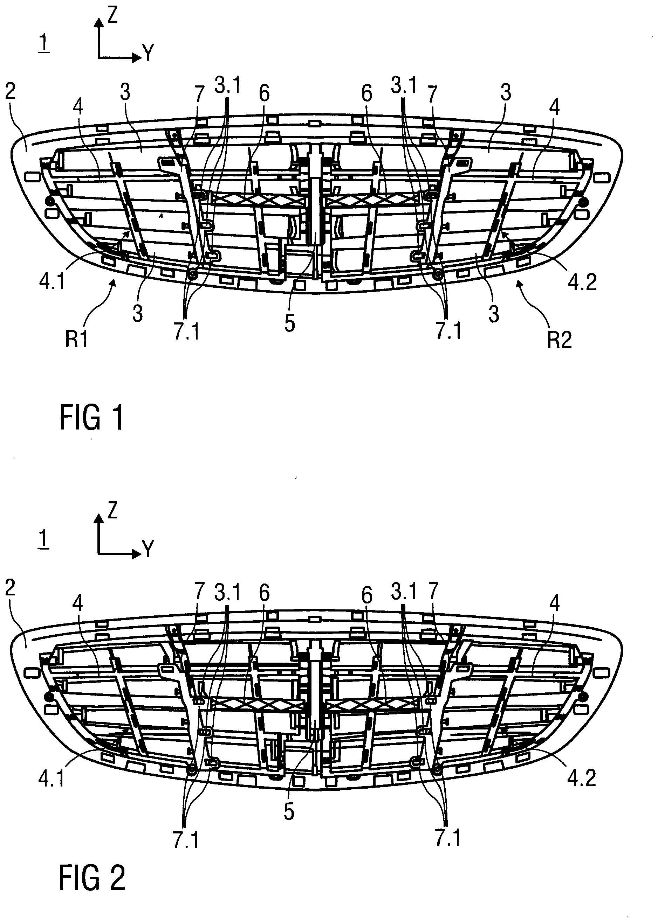

In Figur 1 ist eine Kühlergrillanordnung 1 für ein nicht näher dargestelltes Fahrzeug in einer Rückansicht gezeigt. Die Kühlergrillanordnung 1 besteht aus einem einen Hauptlufteinlass einfassenden Tragrahmen 2, Verschlussklappen 3, welche gemäß Figur 1 eine Verschlussstellung aufweisen, einem Klappenrahmen 4, einem Stellantrieb 5, zwei Antriebshebeln 6 und zwei Schubriegeln 7.

Eine derartige Kühlergrillanordnung 1 dient dazu, die Haupteinlassöffnung in Abhängigkeit von Betriebszuständen des Fahrzeuges zu öffnen und zu verschließen. Insbesondere wird die Haupteinlassöffnung bei einem geringen Wärmeaufkommen oder bei ausgeschalteter Brennkraftmaschine verschlossen, um eine unnötige Kühlung durch Fahrtwind und/oder einen unerwünschten Wärmeaustritt durch die Haupteinlassöffnung zu vermeiden. Darüber hinaus kann ein Verschließen der Haupteinlassöffnung zu einer erheblichen Verbesserung des Luftwiderstandsbeiwertes, des sogenannten c_{W}-Wertes des Fahrzeuges bei vergleichsweise hoher Fahrgeschwindigkeit führen.

Die Kühlergrillanordnung 1 weist zwei Klappenreihen R1, R2 auf, die jeweils vier Verschlussklappen 3 umfassen und nebeneinander angeordnet sind. Dabei sind die Verschlussklappen 3 einer Klappenreihe R1, R2 in Bezug auf die Fahrzeughochachse Z übereinander angeordnet, wobei sich die Längsachsen der Verschlussklappen 3 senkrecht zur Fahrzeughochachse Z und parallel zur Fahrzeugquerachse Y erstrecken.

Die Verschlussklappen 3 sind zwischen der in dem vorliegenden Ausführungsbeispiel nach Figur 1 gezeigten Verschlussstellung und einer in Figur 2 gezeigten Öffnungsstellung innerhalb ihrer Klappenreihe R1, R2 schwenkbar gelagert, wobei eine Klappendrehachse hinsichtlich der Höhe der jeweiligen Verschlussklappe 3 an dieser mittig verläuft.

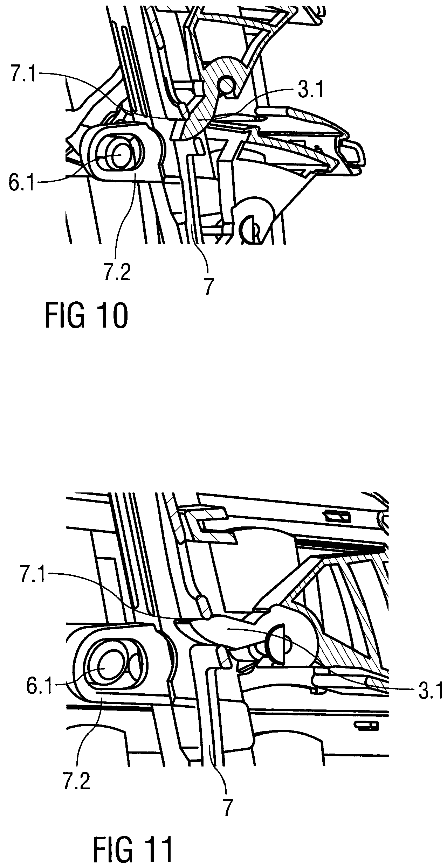

Jede der Verschlussklappen 3 weist einen Klappenhebel 3.1 auf, welcher um die Klappendrehachse schwenkbar ist, wobei der Klappenhebel 3.1 in einer Aussparung 7.1 des Schubriegels 7, dessen Längsachse senkrecht zur Längsachse der Verschlussklappen 3 verläuft, angeordnet ist. Durch die Anordnung eines Klappenhebels 3.1 in einer Aussparung 7.1 des Schubriegels 7 sind die jeweilige Verschlussklappe 3 und der Schubriegel 7 antriebsverbunden, wobei die Wirkverbindung in den Figuren 10 und 11 näher beschrieben wird.

Zum Verstellen der Verschlussklappen 3 ist der jeweilige Schubriegel 7 einer Klappenreihe R1, R2 über einen Antriebshebel 6 mit dem Stellantrieb 5 verbunden, welcher sich in Bezug auf die Querausdehnung der Kühlergrillanordnung 1 und in Bezug auf die Fahrzeugquerachse Y im Wesentlichen in der Mitte befindet und beiden Klappenreihen R1, R2 zugeordnet ist.

Die beiden Antriebshebel 6 sind um eine Antriebshebeldrehachse drehbar gelagert, wobei die Antriebshebel 6 insbesondere um eine gemeinsame Antriebshebeldrehachse drehbar gelagert sind.

Weiterhin weist der jeweilige Antriebshebel 6 eine Kopplungseinrichtung auf, die mit dem zugehörigen Schubriegel 7 antriebsverbunden ist, wobei die Kopplungseinrichtung als ein Kugelkopflager ausgebildet sein kann. Alternativ dazu kann die Kopplungseinrichtung auch als ein anderes Lager ausgebildet sein.

Die an dem Antriebshebel 6 ausgebildete Kopplungseinrichtung umfasst eine nicht näher dargestellte Kugelkopfpfanne, deren Form mit einem an dem Klappenrahmen 4 ausgeformten nicht gezeigten Kugelkopf korrespondiert, so dass eine Anbindung des jeweiligen Antriebshebels 6 an den Klappenrahmen 4 hergestellt ist. Weiterhin weist die Kopplungseinrichtung einen Zapfen 6.1 auf, der mit dem Schubriegel 7 im Eingriff steht und der Schubriegel 7 dadurch antreibbar, d. h. bewegbar ist. Dabei erfolgt der Antrieb des Schubriegels 7 direkt und nicht wie im Stand der Technik indirekt über einen Klappenhebel 3.1.

In Figur 2 ist die Kühlergrillanordnung 1 in der Öffnungsstellung der Verschlussklappen 3 dargestellt.

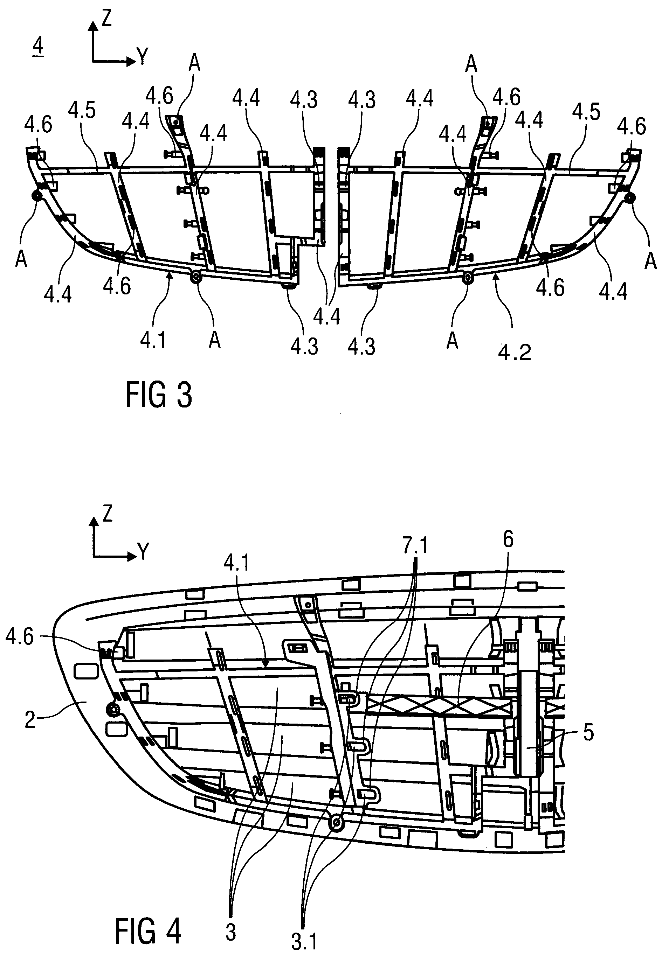

Die Verschlussklappen 3, der Schubriegel 7 und der Stellantrieb 5 sind an dem in Figur 3 im Detail gezeigten Klappenrahmen 4 angeordnet, welcher zwei Rahmenkomponenten 4.1, 4.2 aufweist. Dabei ist eine erste Rahmenkomponente 4.1 im Bereich einer ersten Klappenreihe R1 und eine zweite Rahmenkomponente 4.2 ist im Bereich einer zweiten Klappenreihe R2 der Kühlergrillanordnung 1 angeordnet.

Der Klappenrahmen 4 dient zur Aufnahme der Verschlussklappen 3, des Stellantriebes 5 und der Schubriegel 7, wobei die beiden Rahmenkomponenten 4.1,4.2 jeweils über drei Anschraubpunkte A an dem Tragrahmen 2 einer nicht gezeigten Kühlerverkleidung befestigbar sind. Hierzu ist durch einen jeweiligen Anschraubpunkt A ein nicht näher dargestelltes Verbindungselement, insbesondere eine Schraube, durchführbar und mit dem Tragrahmen 2 verschraubbar. Zusätzlich weisen die Rahmenkomponenten 4.1, 4.2 mit an dem Tragrahmen 2 nicht näher gezeigten ausgebildeten Rastelemente korrespondierende Rastelemente 4.3 auf, so dass der Klappenrahmen 4 sowohl kraft- als auch formschlüssig an dem Tragrahmen 2 der Kühlergrillanordnung 1 befestigbar ist.

Der Klappenrahmen 4 ist aus Längsstreben 4.4 und Querstreben 4.5 gebildet, wobei die jeweilige Rahmenkomponente 4.1, 4.2 mit seinen Längstreben 4.4 und Querstreben 4.5 einteilig ausgebildet ist.

An den im Wesentlichen vertikal verlaufenden Längsstreben 4.4 sind Aufnahmeeinheiten in Form von Lagerstellen 4.6 ausgeformt, an denen die Verschlussklappen 3 zumindest formschlüssig befestigbar, insbesondere verrastbar sind. Dabei ist eine Verschlussklappe 3 gemäß dem vorliegenden Ausführungsbeispiel nach Figur 3 an drei Längsstreben 4.4 einer Rahmenkomponente 4.1, 4.2 des Klappenrahmens 4 befestigbar.

Alternativ zur Ausbildung der Aufnahmeeinheiten als Lagerstellen 4.6 können die Verschlussklappen 3 auch mittels einer Clipsverbindung oder anderer Verbindungsmöglichkeiten, insbesondere zur formschlüssigen Befestigung der Verschlussklappen 3 an dem Tragrahmen 2, ausgebildet sein, wobei eine Schwenkbewegung der Verschlussklappen 3 ausführbar ist.

Die Verschlussklappen 3 werden vor der Montage der Kühlergrillanordnung 1 an der jeweiligen Rahmenkomponente 4.1, 4.2 des Klappenrahmens 4 befestigt und anschließend lackiert, so dass der Klappenrahmen 4 zusätzlich als Lackieraufnahme für die Verschlussklappen 3 dient und dadurch Aufsteckzeiten in einer Lackieranlage reduziert werden können. Da die Verschlussklappen 3 nach der Montage an dem Klappenrahmen 4 lackiert werden, kann eine weitere Handhabung und eine daraus resultierende mögliche Beschädigung der Beschichtung der Verschlussklappen 3 und des Tragrahmens 2 nach dem Lackierprozess weitestgehend ausgeschlossen werden.

Im montierten Zustand des Klappenrahmens 4, wie in den Figuren 1 und 2 sowie als Ausschnitt in Figur 4 gezeigt ist, sind die beiden Rahmenkomponenten 4.1, 4.2 derart an dem Tragrahmen 2 befestigt, dass ein Abstand zwischen innenliegenden Längsstreben 4.4 ausgebildet ist. Dieser Abstand dient dazu, dass das Risiko einer Beschädigung des Klappenrahmens 4 sowie der Verschlussklappen 3, insbesondere bei einer Kollision des Fahrzeuges mit einer vergleichsweise geringen Kollisionsgeschwindigkeit, zumindest verringert ist.

Ein Aktuator in Form des Stellantriebes 5 ist schemenhaft, u. a. in Figur 4 dargestellt, und wird bei Montage schwimmend an dem Klappenrahmen 4 befestigt, wobei der Stellantrieb 5 im montierten Zustand abschnittsweise zwischen den Rahmenkomponenten 4.1, 4.2 angeordnet ist. Der Stellantrieb weist nicht im Detail gezeigte sogenannte Montagerippen auf, die in den Klappenrahmen 4 eingeschoben werden. Dabei sind an dem Stellantrieb 5 seitlich ausgebildete obere Montagerippen mit entsprechenden an dem Klappenrahmen 4 ausgeformten Formteilen verrastet, so dass der Stellantrieb 5 sicher an dem Klappenrahmen 4 gehalten ist und gegen ein Herausfallen gesichert ist.

Bei einer Demontage des Stellantriebes 5, beispielsweise durch einen Defekt desselben bedingt, wird ein jeweiliger vorzugsweise an dem Klappenrahmen 4 ausgeformter Verriegelungshebel heruntergedrückt, so dass der Stellantrieb 5 hinsichtlich des Klappenrahmens 4 von oben entnehmbar ist.

Insbesondere ist der Stellantrieb 5 mittels seiner Montagerippen in Y-Richtung also in Richtung der Fahrzeugquerachse Y schwimmend gelagert, wodurch mögliche Toleranzen beispielsweise in Bezug auf die Rahmenkomponenten 4.1, 4.2 und deren innere Längsstreben 4.4 ausgeglichen werden können und auch, wie oben beschrieben, das Risiko von Bagatellschäden bei einer Kollision des Fahrzeuges zumindest verringert werden kann.

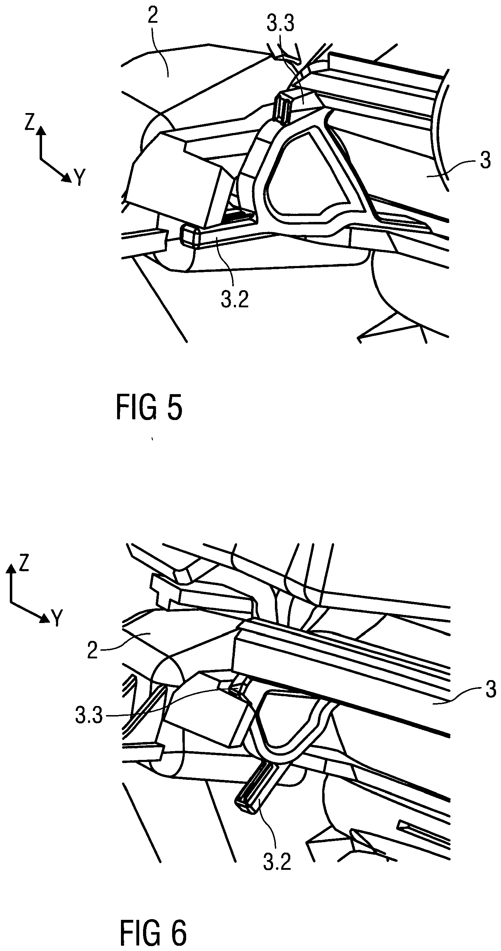

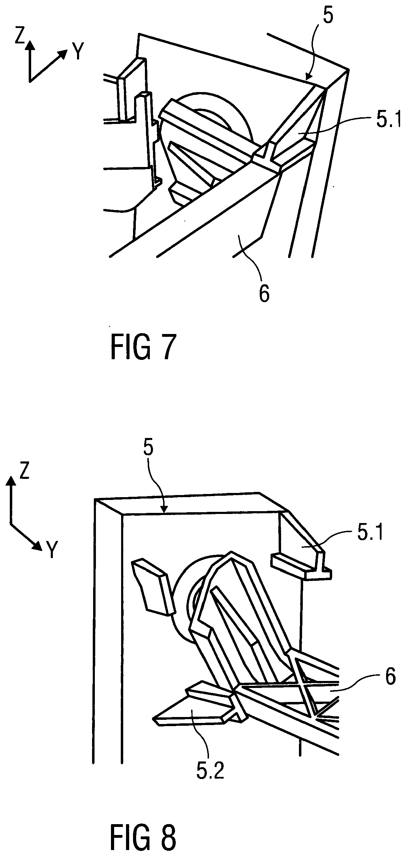

Zusätzlich sind an dem Stellantrieb 5 in den Figuren 7 und 8 gezeigte Endanschläge 5.1, 5.2 ausgebildet, die dazu vorgesehen sind, ein überschüssiges Drehmoment antriebsnah in den Stellantrieb 5 einzuleiten, so dass das überschüssige Drehmoment nicht dauerhaft in an den Verschlussklappen 3 ausgebildete Anschlagelemente 3.2, 3.3, die in den Figuren 5 und 6 gezeigt sind, eingeleitet wird. Dadurch kann einem Verschleiß eines Materials der Anschlagelemente 3.2, 3.3 und Beschädigungen einer Antriebsmechanik und der Verschlussklappen 3 durch eine verhältnismäßig hohe Drehmomentbeaufschlagung weitestgehend entgegengewirkt werden.

Das Anschlagskonzept ist zweistufig ausgeführt, wobei an den Verschlussklappen 3 in Richtung einer äußeren Längsstrebe 4.4 der jeweiligen Rahmenkomponente 4.1, 4.2 die Anschlagelemente 3.2, 3.3 ausgebildet sind. Das zweistufige Anschlagskonzept resultiert insbesondere daraus, dass es nach dem Kontakt der Verschlussklappen 3 mit einer ersten Anschlagebene zu einer kleinen elastischen Verwindung des Antriebshebels 6, welcher insbesondere als Kurbeltrieb ausgebildet ist, kommt. Hieraus resultiert ein zeitlich verzögerter Kontakt der Verschlussklappen 3 mit einer zweiten Anschlagebene.

Um zu erreichen, dass eine Oberkante und eine Unterkante der jeweiligen Verschlussklappe 3 im montierten Zustand der Kühlergrillanordnung 1 mit einem vorgegebenen Spaltmaß zu dem Tragrahmen 2 beabstandet ist, sind an jeder, zumindest an der äußeren Längsstrebe 4 ausgebildeten Lagerstelle 4.6 als Klappenlager die Anschlagelemente 3.2, 3.3 ausgeformt, wobei ein erstes Anschlagelement 3.2 für die Öffnungsstellung und ein zweites Anschlagelement 3.3 für die Verschlussstellung vorgesehen ist. Dabei schlagen die Anschlagelemente 3.2, 3.3 in der jeweiligen Stellung an einem an dem Tragrahmen 2 ausgeformten Formelement an. Mittels dieser Anschlagelemente 3.2, 3.3 ist eine Geräuschentstehung, insbesondere ein Klappern durch Anschlagen der Verschlussklappen 3 an den Tragrahmen 2 bei einer Fahrt des Fahrzeuges auf einer unebenen Straße, bei einer sogenannten Schlechtwegfahrt, im Wesentlichen verhindert.

Ein Drehmoment, welches das Drehmoment, mittels welchem die jeweilige Verschlussklappe 3 an das entsprechende Anschlagelement 3.2, 3.3 der als Klappenlager ausgeführten Lagerstelle 4.6 gedrückt wird, übersteigt, wird durch die zweite Anschlagebene, nämlich die die an dem Stellantrieb 5 ausgebildet ist, direkt in den Stellantrieb 5 eingeleitet, wodurch ein Kraftniveau der Antriebsmechanik begrenzt wird und somit Beschädigungen weitestgehend vermieden werden können. Die zweite Anschlagebene ist in den Figuren 7 und 8 näher dargestellt.

Die zweite Anschlagebene umfasst die an dem Stellantrieb 5 ausgeformten Endanschläge 5.1, 5.2, wobei ein erster Endanschlag 5.1 für den jeweiligen Antriebshebel 6 in der Verschlussstellung und ein zweiter Endanschlag 5.2 für den jeweiligen Antriebshebel 6 in der Öffnungsstellung der Verschlussklappen 3 vorgesehen ist.

Die erste Anschlagebene ist an den inneren und äußeren Lagerstellen 4.3 und 4.6 der Verschlussklappen 3 ausgebildet, wobei sich die zweite Anschlagebene an dem Stellantrieb 5 befindet. Dabei ist die zweite Anschlagebene besonders bevorzugt an beiden Seiten des Stellantriebes 5 im Bereich der Antriebsverbindung mit den Antriebshebeln 6 ausgebildet.

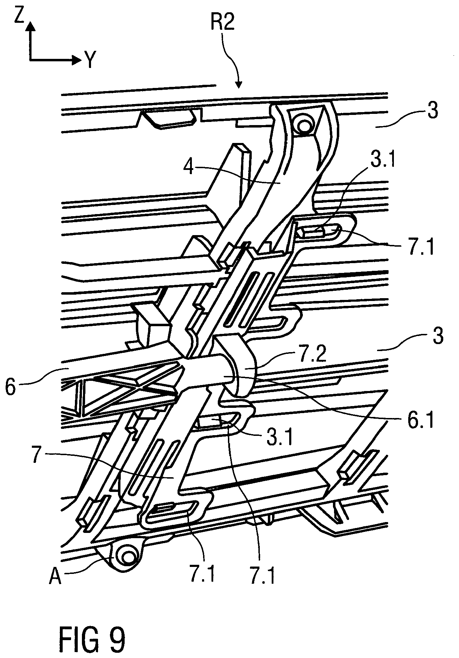

Wie oben beschrieben, erfolgt die Ansteuerung der Verschlussklappen 3 über den Stellantrieb 5, der beidseitig mit jeweils einem Antriebshebel 6 antriebsverbunden ist, wobei der jeweilige Antriebshebel 6 wiederum über seine Kopplungseinrichtung mit jeweils einem Schubriegel 7 verbunden ist. Dabei ist diese Verbindung durch Anordnung des Zapfens 6.1 in einer Aufnahmeeinheit 7.2 an dem Schubriegel 7 hergestellt. Die Verbindung zwischen dem Antriebshebel 6 und seinem zugeordneten Schubriegel 7 ist in Figur 9 in einer perspektivischen Ansicht näher gezeigt.

Mittels des Zapfens 6.1 ist das Drehmoment des Stellantriebes 5 über den Antriebshebel 6 auf den Schubriegel 7 übertragbar, wobei auch der Antriebshebel 6 schwimmend gelagert ist. Insbesondere ist der jeweilige Antriebshebel 6 entlang seiner Antriebsachse schwimmend in einem Hohlraum des Stellantriebes 5 gelagert. Die Lagerung des Antriebshebels 6 in der als Kugelkopflager ausgebildeten Kopplungseinrichtung erfolgt dagegen nicht schwimmend, so dass ein Loslager und ein Festlager ausgebildet sind.

Der Schubriegel 7 wird über den an dem Antriebshebel 6 als Koppeleinrichtung ausgebildeten Zapfen 6.1 angetrieben, so dass alle Verschlussklappen 3 der beiden Klappenreihen R1, R2 bei Ansteuerung durch den Stellantrieb 5 gleichzeitig betätigt werden und diese Betätigung synchron ausgeführt wird.

Der Schubriegel 7 ist translatorisch, also geradlinig bewegbar, wobei die translatorische Bewegung aus dem Drehmoment des Stellantriebes 5 resultiert. Dazu ist der Schubriegel 7 beweglich an dem Klappenrahmen 4 gelagert und eine Betätigungskraft wird von dem Schubriegel 7 in einen an der jeweiligen Verschlussklappe 3 ausgebildeten Klappenhebel 3.1 eingeleitet. Dazu ist ein Klappenhebel 3.1 einer Verschlussklappe 3 in einer Aussparung 7.1 des Schubriegels 7 angeordnet, wie in den Figuren 10 und 11 näher gezeigt ist. Figur 10 zeigt den Klappenhebel 3.1 in der Öffnungsstellung und in Figur 11 ist der Klappenhebel 3.1 in der Verschlussstellung der jeweiligen Verschlussklappe 3 gezeigt.

Der jeweilige Klappenhebel 3.1 ist derart ausgeformt, dass Auflageflächen des Klappenhebels 3.1 unabhängig von einer Positionierung der Verschlussklappe 3 fortlaufend an dem die Aussparung 7.1 begrenzenden Randbereich anliegen und somit kein Zwischenraum, welcher auch als Spiel bezeichnet wird, gebildet ist.

Die Klappenhebel 3.1 sind so geformt, dass die sich gegenüberliegenden Enden spitz zulaufen, wobei die Klappenhebel 3.1 zumindest im Schnitt zumindest nahezu symmetrisch ausgeformt sind und eine Wölbung aufweisen, so dass stets ein Kontakt zwischen dem Klappenhebel 3.1 und dem Schubriegel 7 sichergestellt ist. Der Klappenhebel 3.1 und die Aussparung 7.1 sind also als sogenannte Zwangsführung, die unter dem Begriff der Desmodromik bekannt ist, ausgebildet. Durch eine derartige Ausformung der Klappenhebel 3.1 und der Aussparungen 7.1 ist ein Spiel zwischen der jeweiligen Aussparung 7.1 und dem zugehörigen Klappenhebel 3.1 zumindest minimiert.

Mittels einer derartig ausgebildeten Zwangsführung zwischen dem Klappenhebel 3.1 der jeweiligen Verschlussklappe 3 und der Aussparung 7.1 des Schubriegels 7 ist es möglich, dass die Verschlussklappen 3 jedwede Teilöffnungsstellung einnehmen können, ohne dass ein Klappern, insbesondere durch Anschlagen des Klappenhebels 3.1 in der jeweiligen Aussparung 7.1 bei Fahrt des Fahrzeugs auf unebener Straße oder ähnlichen Fahrzuständen, entsteht.

Zudem ist mittels der Zwangsführung auch ein Synchronlauf der Verschlussklappen 3 beim Einnehmen der Verschlussstellung und beim Einnehmen der Öffnungsstellung sichergestellt.

## Patentansprüche

1. Kühlergrillanordnung (1) für ein Fahrzeug, umfassend zumindest einen einen Hauptlufteinlass einfassenden Tragrahmen (2), eine Anzahl von Verschlussklappen (3), die zwischen einer Verschlussstellung und einer Öffnungsstellung um eine Klappendrehachse drehbar gelagert sind, wobei an den Verschlussklappen (3) Klappenhebel (3.1) angeformt oder ausgebildet sind, die mit einem Schubriegel (7) in Wirkverbindung stehen, und einen Stellantrieb (5) zur Positionierung der Verschlussklappen (3), wobei ein Klappenrahmen (4) zur Aufnahme der Verschlussklappen (3), des Schubriegels (7) und des Stellantriebes (5) vorgesehen ist, **dadurch gekennzeichnet, dass** der Klappenrahmen (4) zweiteilig ausgebildet ist und an dem Tragrahmen (2) einer Kühlerverkleidung kraft-, form- und/oder stoffschlüssig befestigbar ist.

2. Kühlergrillanordnung (1) nach Anspruch 1,
**dadurch gekennzeichnet, dass** zur Aufnahme der Verschlussklappen (3), des Schubriegels (7) und des Stellantriebes (5) Aufnahmeeinheiten (7.2) an dem Klappenrahmen (4) ausgeformt oder angeformt sind.

3. Kühlergrillanordnung (1) nach Anspruch 1 oder 2,
**dadurch gekennzeichnet, dass** der Stellantrieb (5) schwimmend an dem Klappenrahmen (4) angeordnet ist.

4. Kühlergrillanordnung (1) nach einem der vorhergehenden Ansprüche,
**dadurch gekennzeichnet, dass** eine mittels des Stellantriebes (5) auf die Verschlussklappen (3) übertragene Bewegung mittels an dem Tragrahmen (2) und den Verschlussklappen (3) ausgebildeten Anschlagelementen (3.2, 3.3) begrenzbar ist.

5. Kühlergrillanordnung nach einem der vorhergehenden Ansprüche,
**dadurch gekennzeichnet, dass** an dem Stellantrieb (5) Endanschläge (5.1, 5.2) zur Begrenzung einer Schwenkbewegung eines Antriebshebels (6) ausgebildet sind.

6. Kühlergrillanordnung (1) nach einem der vorhergehenden Ansprüche,
**dadurch gekennzeichnet, dass** der Stellantrieb (5) mit dem Schubriegel (7) derart gekoppelt ist, dass ein Drehmoment des Stellantriebes (5) mittels des Schubriegels (7) auf die Verschlussklappen (3) übertragbar ist.

7. Kühlergrillanordnung (1) nach einem der vorhergehenden Ansprüche,
**dadurch gekennzeichnet, dass** die Klappenhebel (3.1) derart ausgebildet sind, dass der jeweilige Klappenhebel (3.1) unabhängig von einer Bewegung des Schubriegels (7) im Wesentlichen fortlaufend in einer dem jeweiligen Klappenhebel (3.1) zugeordneten Aussparung (7.1) anliegt.

8. Kühlergrillanordnung (1) nach einem der vorhergehenden Ansprüche,
**dadurch gekennzeichnet, dass** die Klappendrehachse der jeweiligen Verschlussklappe (3) mittig angeordnet ist.

## Claims

1. Radiator grille assembly (1) for a vehicle, comprising at least one supporting frame (2) surrounding a main air inlet, a number of closing flaps (3) mounted for rotation about a flap axis of rotation between a closed position and an open position, flap levers (3.1) in operative connection with a slide bolt (7) being integrally formed with or formed on the closing flaps (3), and an actuator (5) for positioning the closing flaps (3), wherein a flap frame (4) is provided for the accommodation of the closing flaps (3), the slide bolt (7) and the actuator (5), **characterised in that** the flap frame (4) is designed in two parts and can be secured to the supporting frame (2) of a radiator shield in a non-positive or positive manner and/or by adhesive force.

2. Radiator grille assembly (1) according to claim 1,
**characterised in that** reception units (7.2) are shaped or integrally formed on the flap frame (4) for the accommodation of the closing flaps (3), the slide bolt (7) and the actuator (5).

3. Radiator grille assembly (1) according to claim 1 or 2,
**characterised in that** the actuator (5) is floatingly mounted on the flap frame (4).

4. Radiator grille assembly (1) according to any of the preceding claims,
**characterised in that** a movement transmitted to the closing flaps (3) by means of the actuator (5) can be limited by means of stop elements (3.2, 3.3) formed on the supporting frame (2) and the closing flaps (3).

5. Radiator grille assembly (1) according to any of the preceding claims,
**characterised in that** end stops (5.1, 5.2) for limiting a pivoting movement of a drive lever (6) are formed on the actuator (5).

6. Radiator grille assembly (1) according to any of the preceding claims,
**characterised in that** the actuator (5) is coupled to the slide bolt (7) in such a way that a torque of the actuator (5) can be transmitted to the closing flaps (3) by means of the slide bolt (7).

7. Radiator grille assembly (1) according to any of the preceding claims,
**characterised in that** the flap levers (3.1) are designed such that the respective flap lever (3.1) is substantially continuously in contact with a recess (7.1) assigned to the respective flap lever (3.1) irrespective of a movement of the slide bolt (7).

8. Radiator grille assembly (1) according to any of the preceding claims,
**characterised in that** the flap axis of rotation of the respective closing flap (3) is located centrally.

## Revendications

1. Agencement (1) de grille de radiateur destiné à un véhicule automobile, comprenant au moins un cadre support (2) comportant une arrivée d'air principale, une pluralité de clapets (3) de fermeture qui sont disposés en rotation entre une position de fermeture et une position d'ouverture autour d'un axe de rotation de clapet, sur les clapets (3) de fermeture sont conçus ou formés des leviers (3.1) de clapet, qui se trouvent en coopération avec une crémone (7) et un actionneur (5) destiné à positionner les clapets (3) de fermeture, un cadre (4) de clapet étant destiné à recevoir les clapets (3) de fermeture, la crémone (7) et l'actionneur (5), **caractérisé en ce que** le cadre (4) de clapet est conçu en deux parties et peut être fixé sur le cadre support (2) d'un habillage de radiateur, par complémentarité de forme, à force et/ou par liaison de matière.

2. Agencement (1) de grille de radiateur selon la revendication 1, **caractérisé en ce que** des unités de réception (7.2) destinées à recevoir les clapets (3) de fermeture, la crémone (7) et l'actionneur (5) sont formées ou façonnées sur le cadre (4) de clapet.

3. Agencement (1) de grille de radiateur selon la revendication 1 ou la revendication 2, **caractérisé en ce que** l'actionneur (5) est flottant sur le cadre (4) de clapets.

4. Agencement (1) de grille de radiateur selon l'une quelconque des revendications précédentes, **caractérisé en ce qu'**un mouvement transmis au moyen de l'actionneur (5) aux clapets (3) de fermeture peut être limité au moyen des éléments de butée (3.2, 3.3) conçus sur le cadre support (2) et les clapets (3) de fermeture.

5. Agencement de grille de radiateur selon l'une quelconque des revendications précédentes, **caractérisé en ce que** sur l'actionneur (5) sont conçus des butées arrêtoirs (5.1, 5.2) destinées à limiter un mouvement de pivotement d'un levier (6) d'actionnement.

6. Agencement (1) de grille de radiateur selon l'une quelconque des revendications précédentes, **caractérisé en ce que** l'actionneur (5) est accouplé à la crémone (7) de telle sorte qu'un moment de rotation de l'actionneur (5) puisse être transmissible au moyen de la crémone (7) aux clapets (7) de fermeture.

7. Agencement (1) de grille de radiateur selon l'une quelconque des revendications précédentes, **caractérisé en ce que** les leviers (3.1) de clapet sont conçus de telle sorte que le levier (3.1) de clapet respectif indépendamment d'un mouvement de la crémone (7) se trouve essentiellement en continu dans un évidement (7.1) associé au levier (3.1) de clapet respectif.

8. Agencement (1) de grille de radiateur selon l'une quelconque des revendications précédentes, **caractérisé en ce que** l'axe de rotation des clapets (3) de fermeture respectifs est aménagé au centre.
